# EUROPEAN PATENT SPECIFICATION

(11) **EP 4 181 292 B1**
(45) Date of publication and mention of the grant of the patent: **10.12.2025**
(21) Application number: 22736865.1
(22) Date of filing: 06.01.2022
(51) Int. Cl.: H01M 50/242, H01M 50/211, H01M 50/569, H01M 10/6551, H01M 10/647, H01M 10/653, H01M 10/613

(54) **BATTERY PACK INCLUDING BATTERY MODULES**
BATTERIEPACK MIT BATTERIEMODULEN
BLOC-BATTERIE COMPRENANT DES MODULES DE BATTERIE

(30) Priority: 11.01.2021 KR 20210003176
(43) Date of publication of application: 17.05.2023
(73) Proprietor: LG Energy Solution, Ltd., Seoul 07335 (KR)
(72) Inventor: PARK, Won Kyoung, Daejeon 34122 (KR); SEONG, Junyeob, Daejeon 34122 (KR); PARK, Subin, Daejeon 34122 (KR); HAN, Honggoo, Daejeon 34122 (KR)
(74) Representative: Goddar, Heinz J.
(86) International application number: PCT/KR2022/000252
(87) International publication number: WO 2022/149888

(56) References cited:
- EP-A1- 3 300 164
- EP-A1- 3 660 974
- WO-A1-2020/251207
- DE-U1- 202020 003 828
- JP-A- 2000 067 902
- JP-A- 2002 100 327
- KR-A- 20150 050 314
- KR-A- 20160 146 587
- KR-A- 20200 047 183
- KR-A- 20210 000 551
- KR-B1- 101 084 066
- KR-B1- 101 084 066
- KR-B1- 101 745 081
- US-A1- 2014 087 231
- US-A1- 2019 393 574
- US-B2- 9 196 938

## Description

### [TECHNICAL FIELD]

### Cross Citation with Related Application(s)

This application claims the benefit of Korean Patent Application No. 10-2021-0003176 filed on January 11, 2021 with the Korean Intellectual Property Office.

The present disclosure relates to a battery pack including battery modules and more particularly, to a battery pack including battery modules having improved cooling performance.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle- or large-sized battery module included in a vehicle battery pack, it is frequently exposed to direct sunlight and may be placed under high-temperature conditions such as summer or desert areas.

US 9 196 938 B2, EP 3 300 164 A1 and WO 2020/251207 A1 relate to battery modules.

US 2014 087231 A1 relates to an energy storage apparatus with a plurality of storage cells, a clamping device for clamping the storage cells and a temperature control device for controlling the temperature of the storage cells or a cell composite formed from the storage cells.

KR 101 084 066 B1 relates to a battery module for a secondary battery module with an improved fastening structure of a unit cell.

DE 20 2020 003828 U1 relates to an electro batter for an electric vehicle with a abattery housing containing a plurality of batteries.

US 2019/393574 A1 relates to compositions containing aziridino-functional polyether polymers and thermally-conductive fillers.

EP 3 660 974 A1 relates to a battery module including a heat dissipation plate and to a battery module for cooling a plurality of secondary batteries accommodated therein.

### [DETAILED DESCRIPTION OF THE INVENTION]

### [Technical Problem]

It is an object of the present disclosure to provide a battery pack including battery modules having improved cooling performance and heat transfer performance.

### [Technical Solution]

According to the present disclosure, there is provided a battery pack as defined in claim 1 comprising battery modules; a pack frame for housing the battery module; and a thermal conductive resin layer located between the battery module and the bottom part of the pack frame. A lower surface of the battery cell stack comes into contact with the thermal conductive resin layer.

The battery module comprises: a battery cell stack in which a plurality of battery cells are stacked; and an elastic member that covers the front surface, the rear surface and both side surfaces of the battery cell stack, wherein the elastic member is opened in its lower part so that the lower surface of the battery cell stack is exposed to the outside.

The elastic member may be continuously connected along the front surface, the rear surface and both side surfaces of the battery cell stack.

The battery cell may include a protruding electrode lead, and the electrode lead may include a first electrode lead and a second electrode lead that protrude from the battery cell in directions facing each other.

The first electrode lead and the second electrode lead may be located on the front surface and the rear surface of the battery cell stack.

The battery module may further include a cooling fin located between the battery cells.

The cooling fin may protrude from the lower surface of the battery module.

The battery module may further include a first sensing block located between the front surface of the battery cell stack and the elastic member, and a second sensing block located between the rear surface of the battery cell stack and the elastic member.

The battery module may further include a side surface pad located between the both side surfaces of the battery cell stack and the elastic member.

The battery pack may further include a cooling fin located between the battery cells, wherein the cooling fin may be extended from the lower surface of the battery cell stack to come into contact with the thermal conductive resin layer.

### [Advantageous Effects]

According to embodiments of the present disclosure, through a structure that exposes the lower surface of the battery cell stack, the heat transfer path can be simplified and the cooling performance can be improved.

Further, the elastic member has a structure that is continuously connected while wrapping the battery cell stack, so that the swelling of the battery cell can be suppressed and the deformation of the battery module in the stacking direction of the battery cells can be prevented.

### [BRIEF DESCRIPTION OF THE DRAWINGS]

Fig. 1 is a perspective view showing a battery module for a battery pack according to an embodiment of the present disclosure;
Fig. 2 is an exploded perspective view of the battery module of Fig. 1;
Fig. 3 is a perspective view showing a battery cell included in the battery module of Fig. 2;
Fig. 4 is a perspective view showing a battery cell stack and a cooling fin included in the battery module of Fig. 2;
Fig. 5 is a perspective view showing a battery module according to a comparative example of the present disclosure;
Fig. 6 is a cross-sectional view showing a cross section taken along the cutting line A-A' of Fig. 5;
Fig. 7 is a partial perspective view enlarging and showing a front part of the battery module of Fig. 1;
Fig. 8 is a front view of the battery module of Fig. 7 as viewed from the front;
Fig. 9 is an exploded perspective view of a battery pack according to an embodiment of the present disclosure; and
Fig. 10 is a cross-sectional view showing a cross section taken along the cutting line B-B' of Fig.9.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

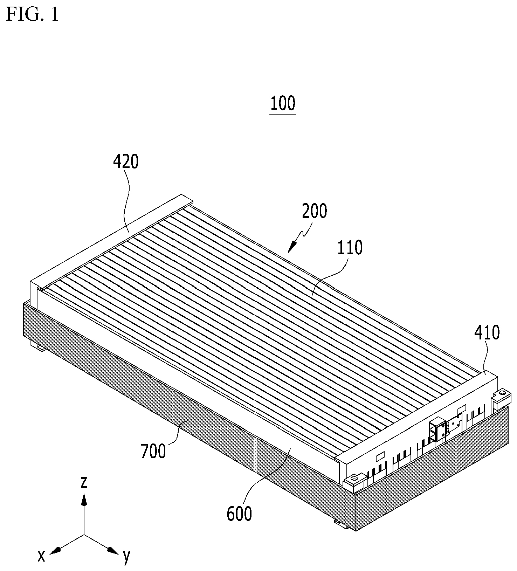

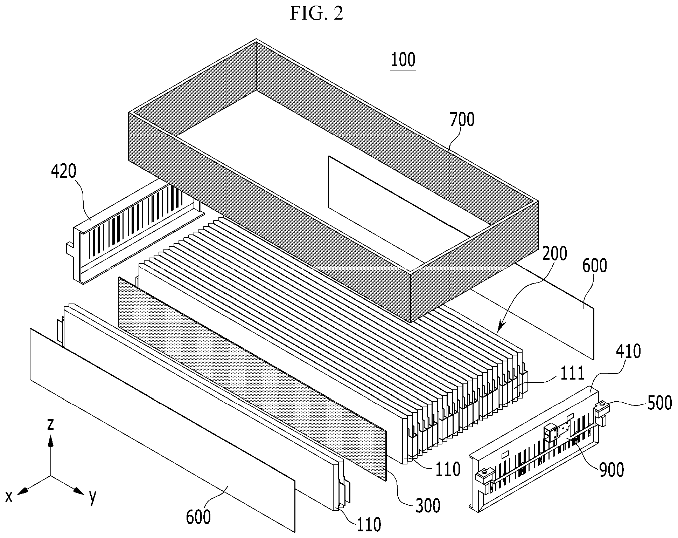

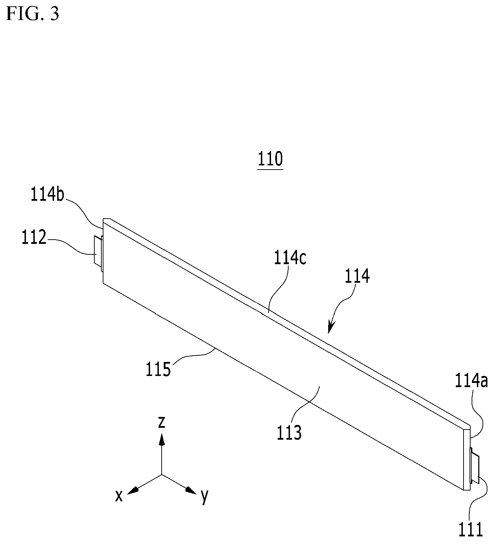

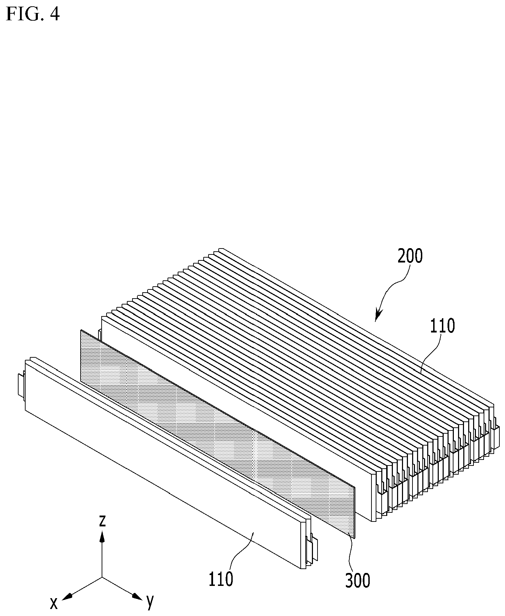

Fig. 1 is a perspective view showing a battery module for a battery pack according to an embodiment of the present disclosure. Fig. 2 is an exploded perspective view of the battery module of Fig. 1. Fig. 3 is a perspective view showing a battery cell included in the battery module of Fig. 2. Fig. 4 is a perspective view showing a battery cell stack and a cooling fin included in the battery module of Fig. 2.

Referring to Figs. 1 to 4, a battery module 100 for a battery pack according to one embodiment of the present disclosure includes a battery cell stack 120 in which a plurality of battery cells 110 are stacked; and an elastic member 700 that covers the front surface, the rear surface and both side surfaces of the battery cell stack 200. The elastic member 700 is opened in its lower part so that the lower surface of the battery cell stack 200 is exposed to the outside. Here, the front surface means a surface of the battery cell stack 200 in the y-axis direction, the rear surface means a surface of the battery cell stack 200 in the -y-axis direction, and both side surfaces mean surfaces of the battery cell stack 200 in the x-axis and -x-axis directions, respectively. Further, the lower surface means a surface of the battery cell stack 200 in the -z-axis direction, the upper surface means a surface of the battery cell stack 200 in the z-axis direction. However, these are surfaces mentioned for convenience of explanation, and may vary depending on the position of a target object or the position of an observer. As will be described later, the front surface and the rear surface of the battery cell stack 200 may be surfaces on which the protruded electrode leads 111 and 112 of the battery cells 110 are located.

First, the battery cell 110 is preferably a pouch-type battery cell, and can be formed in a rectangular sheet-like structure. The battery cell 110 according to the present embodiment includes protruding first and second electrode leads 111 and 112. Specifically, the battery cell 110 according to the present embodiment has a structure in which first and second electrode leads 111 and 112 face each other with respect to the cell main body 113 and protrude from one end part 114a and the other end part 114b, respectively. More specifically, the first and second electrode leads 111 and 112 are connected to an electrode assembly (not shown), and are protruded from the electrode assembly (not shown) to the outside of the battery cell 110. The first and second electrode leads 111 and 112 have different polarities from each other, and for example, one of them may be a cathode lead 111, and the other one may be the anode lead 112. That is, the cathode lead 111 and the anode lead 112 may protrude in mutually opposite directions with respect to one battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts, wherein the sealing parts have a structure that is sealed by a method such as heat-sealing, and the remaining other side part may be composed of a connection part 115. The cell case 114 may be composed of a laminated sheet including a resin layer and a metal layer.

The battery cell 110 may be configured in plural numbers, and the plurality of battery cells 110 can be stacked so as to be electrically connected to each other, thereby forming a battery cell stack 120. Particularly, as shown in Figs. 1 and 2, the plurality of battery cells 110 can be stacked along a direction parallel to the y-axis. Thereby, the first electrode lead 111 and the second electrode lead 112 may be protruded toward the x-axis direction and the -x-axis direction, respectively. That is, the first electrode lead 111 and the second electrode lead 112 may be located on the front surface and the rear surface of the battery cell stack 200.

The elastic member 700 according to the present embodiment may be continuously connected along the front surface, the rear surface, and the both side surfaces of the battery cell stack 200. In the process of repeatedly charging and discharging a plurality of battery cells 110, a phenomenon in which the internal electrolyte decomposes to generate gas and the battery cell 110 swells, that is, a swelling phenomenon, may occur. In particular, each battery cell 110 may cause swelling in the stacking direction of the battery cells 110 (direction parallel to the x-axis). In the present embodiment, since the elastic member 700 having elasticity is continuously connected along the front surface, the rear surface and the both side surfaces of the battery cell stack 200, swelling of the battery cells 110 can be suppressed, and deformation of the battery module 100 in the stacking direction of the battery cells 110 can be minimized.

Further, the battery module for a battery pack according to the present embodiment can form a module-less structure in which the module frame and the end plate are removed. The battery module 100 for a battery pack according to the present embodiment can maintain and fix its shape by the elastic member 700 instead of the module frame or the end plate. As the module frame and end plate are removed, complicated processes that require precise control, such as a process of housing the battery cell stack 200 in the module frame or a process of assembling the module frame and the end plate, are unnecessary. Additionally, it has the advantage that the weight of the battery module 100 can be greatly reduced by the removed module frame and end plate. Further, the battery module 100 for a battery pack according to the present embodiment has the advantage that as the module frame is removed, it is easy to rework during the battery pack assembly process, but this can be distinguished from a conventional battery module having a module frame in which it is not possible to rework even if a defect occurs in the welded structure of the module frame.

Further, the upper surface and lower surface of the battery cell stack 200 are exposed to the outside. However, because it is more effective for heat dissipation than being surrounded by the module frame, the cooling performance can be improved. Here, the upper surface means a surface of the battery cell stack 200 in the z-axis direction, and the lower surface means a surface of the battery cell stack 200 in the -z-axis direction.

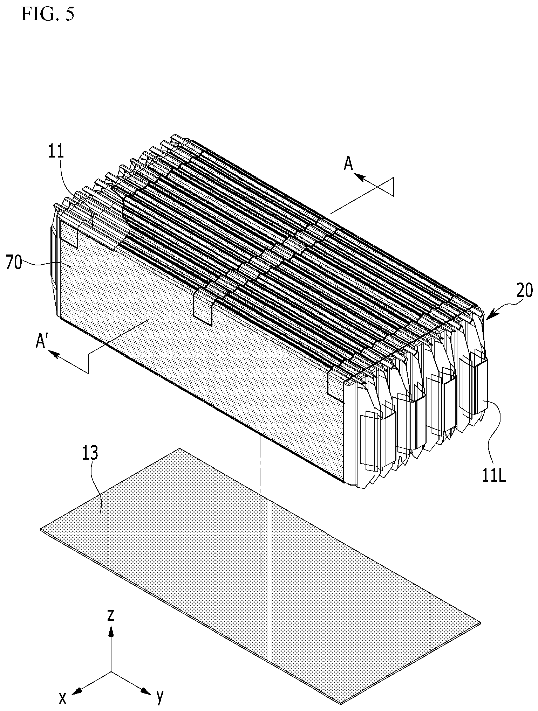

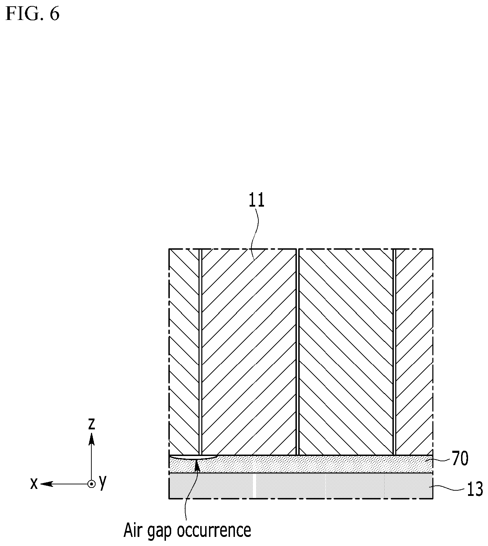

Fig. 5 is a perspective view showing a battery module according to a comparative example of the present disclosure. Fig. 6 is a cross-sectional view showing a cross section taken along the cutting line A-A' of Fig. 5.

Referring to Figs. 5 and 6, the battery module 10 according to the comparative example of the present disclosure includes a battery cell stack 20 in which a plurality of battery cells 11 are stacked, and an elastic member 70 that wraps the battery cell stack 20. At this time, unlike the battery module 100 according to the present embodiment, the elastic member 70 wraps the upper surface, the lower surface and both side surfaces of the battery cell stack 20. That is, the elastic member 70 wraps the surface excluding the front and rear surfaces of the battery cell stack 20 on which the electrode leads 11L are formed. Similarly, here, the front surface means the surface of the battery cell stack 20 in the y-axis direction, the rear surface means the surface of the battery cell stack 20 in the -y-axis direction, and the both side surfaces mean the x-axis and -x-axis directions of the battery cell stack 20, respectively. Further, the lower surface means the surface of the battery cell stack 20 in the -z-axis direction, and the upper surface means a surface of the battery cell stack 20 in the z-axis direction. The electrode leads 11L of the battery cell 11 are located on the front surface and the rear surface of the battery cell stack 20.

Although not specifically shown in the figure, the battery cell stack 20 may be housed in the module frame or directly mounted on the pack frame without the module frame, wherein the thermal conductive resin layer 13 may be located on the lower surface of the battery cell stack 20.

In this comparative example, as shown in Fig. 6, the heat generated in the battery cell 11 is transferred to the thermal conductive resin layer 13 via the elastic member 70. Further, a heat transfer obstruction element such as an air gap may occur between the battery cell 11 and the elastic member 70. Unlike the same, the battery module 100 according to the present embodiment is configured such that the elastic member 700 covers the front surface, the rear surface and both side surfaces of the battery cell stack 200, and is opened in its lower part, so that the lower surface of the battery cell stack 200 is exposed. Thereby, the battery cell 110 comes into direct contact with a thermal conductive resin layer described later. The elastic member 700 according to the present embodiment is different from the elastic member 70 according to the comparative example, in that it is configured to cover the front and rear surfaces of the battery cell stack 200 in which the first and second electrode leads 111 and 112 are located, rather than the upper and lower surfaces of the battery cell stack 200. Because the heat transfer path is simplified and there is no room for heat transfer obstruction factors such as air gaps, the battery module according to the present embodiment has improved cooling and heat dissipation performance as compared with the battery module according to this comparative example.

Meanwhile, if the elastic member 700 has a predetermined elastic force, the material thereof is not particularly limited, but as an example, it may include at least one of a composite material such as a high molecular polymer synthetic material, a FRB (fiber-reinforced plastic), and a metal alloy.

Meanwhile, referring to Figs. 1 and 2 again, the battery module 100 for a battery pack according to the present embodiment may further include a plate-shaped side pad 600 located between the both side surfaces of the battery cell stack 200 and the elastic member 700. Instead of removing the module frame and the end plate, side surface pads 600 are arranged on both sides of the battery cell stack 200 to supplement the stiffness of the battery module 100, and a buffering function can be performed between the battery cell 110 and the elastic member 700. A pad made of a foam material may be applied to the side pad 600.

Meanwhile, referring to Figs. 2 and 4 again, the battery module 100 for a battery pack according to the present embodiment may further include a cooling fin 300 located between the battery cells 110. Although only one cooling fin 300 is illustrated in Figs. 2 and 4, all of the cooling fins 300 according to the present embodiment can be located between the battery cells 110.

The cooling fin 300 may include a metal material having high thermal conductivity. The specific material is not limited, and as an example, aluminum (Al) may be included. Cooling fins 300 having high thermal conductivity may be arranged between the battery cells 110 and directly attached to widen the cooling area. Thereby, the cooling performance is improved.

Meanwhile, as described above, the lower surface of the battery cell stack 200 is exposed to the outside, wherein the cooling fins 300 according to the present embodiment may protrude from the lower surface of the battery cell stack 200. Thereby, the cooling fins 300 according to the present embodiment may come into direct contact with a thermal conductive resin layer described later. The cooling fin 300 disposed between the battery cells 110 comes into direct contact with the thermally conductive resin layer, so that the heat dissipation performance of the battery module can be maximized.

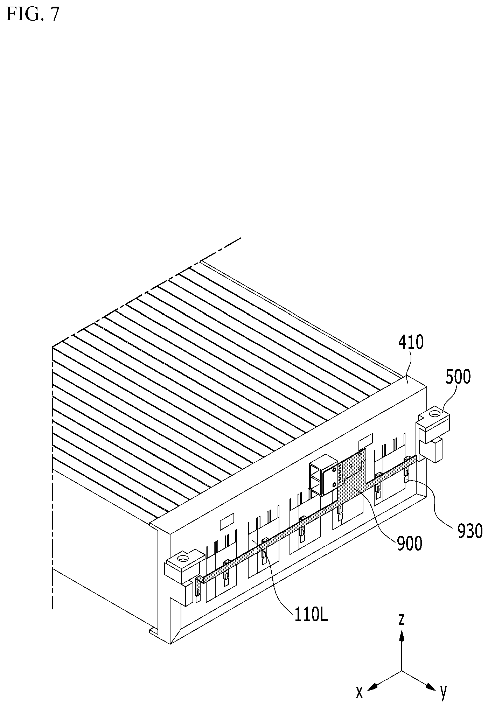

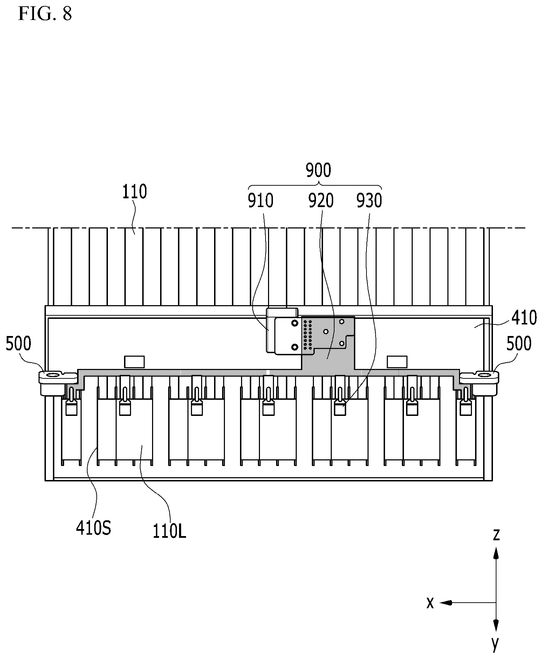

Next, the first and second sensing blocks and the LV sensing assembly will be described in detail with reference to Figs. 7 and 8.

Fig. 7 is a partial perspective view enlarging and showing a front part of the battery module of Fig. 1. Fig. 8 is a front view of the battery module of Fig. 7 as viewed from the front. However, Figs. 7 and 8 show a state in which the elastic member is omitted for convenience of explanation.

Referring to Figs. 2, 3, 7 and 8 together, the battery module 100 for a battery pack according to an embodiment of the present disclosure may include a first sensing block 410 and a second sensing block 420. The first sensing block 410 may be located between the front surface of the battery cell stack 200 and the elastic member 700, and the second sensing block 420 may be located between the rear surface of the battery cell stack 200 and the elastic member 700.

The first sensing block 410 and the second sensing block 420 may include a material having electrical insulation, and as an example, it may include a plastic material, a polymer material, or a composite material. Further, the first sensing block 410 and the second sensing block 420 may have a kind of basket shape, and can be configured so as to cover the front surface and the rear surface of the battery cell stack 200, respectively.

Next, in order to avoid repetition of the description, the first sensing block 410 shown in Figs. 7 and 8 will be mainly described, but the same or similar structure can be applied to the second sensing block 420.

As described above, electrode leads 111 and 112 may be located on the front surface and the rear surface of the battery cell stack 200. A slit 410S may be formed in the first sensing block 410, and when the first sensing block 410 is arranged, the electrode leads 111 and 112 can pass through the slit 410S. Next, at least two electrode leads 111 and 112 may be bent and joined to form an electrode lead assembly 110L. Specifically, the electrode leads 111 and 112 protruding in the same direction with respect to the adjacent battery cells 110 are bent in a direction perpendicular to the protruding direction of the electrode leads 111 and 112, and are joined to each other to form an electrode lead assembly 110L. Thereby, one surface of the electrode lead assembly 110L may be perpendicular to a direction (y-axis direction) in which the electrode leads 111 and 112 protrude from the battery cell 110. In this case, electrode leads having the same polarity may be joined to each other, or electrode leads having different polarities may be joined to each other. In other words, in order to realize a parallel connection between the battery cells 110, electrode leads having the same polarity may be joined to each other, and in order to realize a series connection between the battery cells 110, electrode leads having different polarities may be joined to each other. This can vary depending on the design of the battery module.

Meanwhile, the electrode leads 111 and 112 of the battery cell 110 located outside the battery cell stack 200 may be connected to the terminal busbar 500. Unlike the conventional battery module in which the electrode leads are connected to each other via a busbar, the electrode leads 111 and 112 according to the present embodiment are directly joined to each other, and a part thereof can be connected to the terminal busbar 500 to form a HV (high voltage) connection. Here, the HV connection is a connection that serves as a power source for supplying power, and means a connection between battery cells or a connection between battery modules. In the HV connection structure according to the present embodiment, the busbar and the busbar frame to which the busbar is mounted can be removed.

Meanwhile, the battery module 100 for a battery pack according to the present embodiment may include a low voltage (LV) sensing assembly 900 for transmitting voltage information of a battery cell. The LV sensing assembly 900 may be located in at least one of the first sensing block 410 and the second sensing block 420. Specifically, the LV sensing assembly 900 can be located on the opposite side of a surface facing the battery cell stack 200 among the first sensing block 410. Similarly, although not specifically shown in the figure, the LV sensing assembly 900 can be located on the opposite side of a surface facing the battery cell stack 200 among the second sensing block 420.

The LV sensing assembly 900 is for a low voltage (LV) connection, wherein the LV connection means a sensing connection for sensing and controlling a voltage of a battery cell. Voltage information and temperature information of the battery cell 110 can be transmitted to an external BMS (Battery Management System) via the LV sensing assembly 900. Such LV sensing assembly 900 can be connected to the electrode lead assembly 110L.

The LV sensing assembly 900 may include an LV connector 910, a connection member 920 for connecting the LV connector 910 and the electrode leads 111 and 112, and a joining plate 930 located at one end of the connection member 920 and joined to the electrode leads 111 and 112.

The LV connector 910 can be configured so as to transmit and receive signals to and from an external control device to control the plurality of battery cells 110. The connection member 920 may be a flexible printed circuit board (FPCB) or a flexible flat cable (FFC). Voltage and temperature information measured from the plurality of battery cells 110 may be transmitted to an external BMS (battery management system) via the connection member 920 and the LV connector 910. That is, the LV sensing assembly 900 including the LV connector 910 and the connection member 920 can detect and control phenomena such as overvoltage, overcurrent, and overheating of each battery cell 110. The joining plate 930 is located at one end of the connection member 920 and may be made of a metal material having electrical conductivity. By joining such a joining plate 930 to the electrode leads 111 and 112, the connection member 920 and the electrode lead 111 can be electrically and physically connected. Specifically, one side of the joining plate 930 passes through the connection member 920 and is then bent to thereby be coupled with the connection member 920, and the other side of the joining plate 930 can be formed in a plate shape to be joined, particularly weld-joined, to the electrode leads 111 and 112.

Meanwhile, as described above, the battery cells 110 may be stacked along the x-axis direction to form the battery cell stack 200, whereby the electrode leads 111 and 112 may protrude in the y-axis direction and the -y-axis direction, respectively. At this time, as described above, at least two electrode leads 111 and 112 may be bent and joined to form the electrode lead joined body 110L. The joining plate 930 of the LV sensing assembly 900 can be directly joined to the electrode lead joined body 110L, so that the LV sensing assembly 900 and the electrode leads 111 and 112 can be connected to each other. Since the battery module 100 according to the present embodiment can proceed at once without HV connection and LV connection, respectively. The productivity improvement can be expected, and components such as busbar frames can be removed. Thus, there is an advantage that the battery module 100 having a more compact configuration can be manufactured.

In the joining between the electrode leads 111 and 112 for forming the electrode lead joined body 110L or the joining between the electrode lead joined body 110L and the joining plate 930, the joining method thereof is not particularly limited as long as electrical connection is possible, and as an example, the weld-joining can be performed. Further, the electrode leads 111 and 112 protruding in the y-axis direction are mainly described, but with respect to for the electrode leads 111 and 112 protruding in the -y axis direction, the structure of the electrode lead joined body and the LV sensing assembly 900 can be formed similarly.

Meanwhile, as shown in Figs. 1 and 2, the elastic member 700 according to the present embodiment may cover the electrode leads 111 and 112, that is, the electrode lead joined body 110L. Structurally, the electrode lead joined body 110L is located outside the first sensing block 410 or the second sensing block 420. The elastic member 700 covers the electrode lead joined body 110L, so that the electrode leads 111 and 112 can be primarily protected from the external environment.

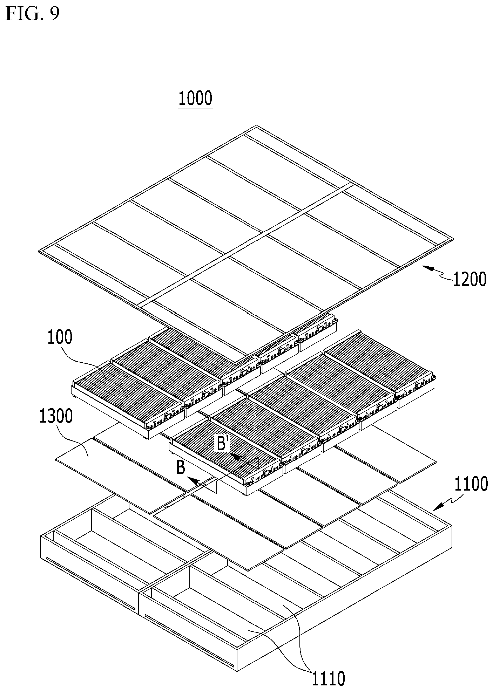

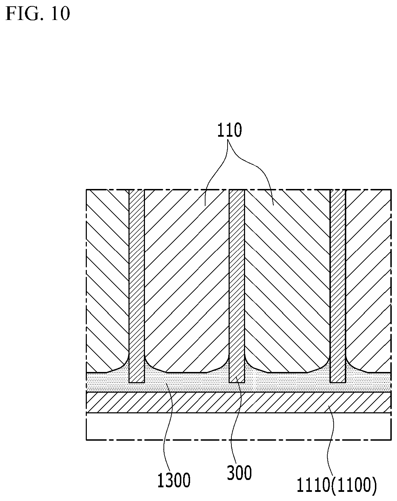

Next, a battery pack according to an embodiment of the present disclosure will be described in detail with reference to Figs. 9 and 10.

Fig. 9 is an exploded perspective view of a battery pack according to an embodiment of the present disclosure. Fig. 10 is a cross-sectional view showing a cross section taken along the cutting line B-B' of Fig.9. Wherein, Fig. 10 shows a cross section thereof, assuming that the battery module 100, the thermal conductive resin layer 1300 and the bottom part 1110 of the pack frame 1100 in Fig. 9 are in a state of being in contact with each other, unlike those shown in Fig. 9.

Referring to Figs. 9 and 10, the battery pack 1000 according to an embodiment of the present disclosure includes battery modules 100, a pack frame 1100 for housing the battery module 100 and a thermal conductive resin layer 1300 located between the battery module 100 and the bottom part 1110 of the pack frame 1100.

The battery modules 100 include a battery cell stack 200 and an elastic member 700 as described above. Since the details of the battery module 100 overlaps with the contents described above, a further description will be omitted.

The battery pack 1000 may further include an upper cover 1200 for covering the pack frame 1100. That is, a plurality of battery modules 100 may be housed between the pack frame 1100 and the upper cover 1200.

The thermal conductive resin layer 1300 is formed by applying a thermal conductive resin onto the bottom part 1110. Specifically, the thermal conductive resin is applied onto the bottom part 1110, the battery module 100 according to the present embodiment is located thereon, and then the thermal conductive resin is cured to form the thermal conductive resin layer 1300.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing a plurality of battery cells 110 constituting the battery cell stack 200. Further, since the thermal conductive resin has excellent heat transfer properties, it is possible to quickly transfer the heat generated in the battery module 100 to the bottom part 1110 and thus prevent the battery pack 1000 from overheating.

Referring to Figs. 2, 9 and 10, as described above, the battery module 100 for a battery pack according to the present embodiment may form a module-less structure in which the module frame and the end plate are removed, and the lower part of the elastic member 700 is opened so that a lower part of the battery cell stack 200 is exposed. In the battery pack 1000, the lower surface of the battery cell stack 200 comes into contact with the thermal conductive resin layer 1300. Thus, the heat generated in the battery cell 110 may be immediately transferred to the bottom part 1110 of the pack frame 1100 through the thermal conductive resin layer 1300. In the case of conventional models having a module frame or a model including the elastic member 70 shown in Fig. 5, since the heat generated from the battery cell is discharged to the outside of the battery module through several layers, the heat transfer path is complicated. That is, it is difficult to effectively transfer the heat generated from the battery cell, and a fine air layer, such as an air gap, that may be formed between the layers may interfere with heat transfer. Unlike the same, since the battery cell 110 according to the present embodiment comes into direct contact with the thermal conductive resin layer 1300 as shown in Fig. 10, the heat transfer path in the lower direction of the battery module 100 may be simplified, and the possibility of generating an air layer such as an air gap can be reduced. Therefore, it is possible to increase the cooling performance of the battery module 100 and the battery pack 1000 including the same.

Further, the cooling fin 300 according to the present embodiment is extended from the lower surface of the battery cell stack 200 to come into contact with the thermal conductive resin layer 1300. Since the lower surface of the battery cell stack 200 is exposed, the cooling fin 300 located between the battery cells 110 can come into direct contact with the thermal conductive resin layer 1300 on the bottom part 1110. By configuring the cooling fins 300 facing the battery cells 110 so as to be in direct contact with the thermal conductive resin layer 1300, the heat discharge performance can be maximized.

Meanwhile, in the module-less structure in which the module frame is removed, it is essential to fix the exposed battery cell 110 for structural safety. Therefore, in the battery pack 1000 according to the present embodiment, since each battery cell 110 constituting the battery module 100 is fixed while being in contact with the thermal conductive resin layer 1300, the structural safety can be supplemented..

In addition, the unnecessary cooling structure can be removed, thereby reducing the cost. Further, since the number of parts in the height direction of the battery pack 1000 is reduced, the space utilization rate can be increased, so that the capacity or output of the battery module can be increased.

Although the terms representing directions such as front, rear, left, right, upper and lower directions are used in the present embodiment, these merely represent for convenience of explanation, and may differ depending on a position of an object, a position of an observer, or the like.

The one or more battery modules according to an embodiment of the present disclosure described above may be mounted together with various control and protection systems such as BMS (battery management system) and a cooling system to form a battery pack.

The battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements can be made. The invention is defined by the appended claims.

### [Description of Reference Numerals]

100: battery module
110: battery cell
200: battery cell stack
700: elastic member

## Claims

1. A battery pack (1000) comprising:
a plurality of battery modules (100)
wherein the battery modules (100) comprise a battery cell stack (200) in which a plurality of battery cells (110) are stacked; and
wherein the battery modules (100) comprise an elastic member (700) that covers the front surface, the rear surface and both side surfaces of the battery cell stack (200),
wherein the elastic member (700) is opened in its lower part so that the lower surface of the battery cell stack (200) is exposed to the outside; and
wherein the battery pack (1000) further comprises:
a pack frame (1100) housing the plurality of battery modules (100);
a thermal conductive resin layer (1300) located between the battery modules (100) and the bottom part (1110) of the pack frame (1100), wherein a lower surface of the battery cell stacks (200) comes into direct contact with the thermal conductive resin layer (1300), and wherein the thermal conductive resin layer (1300) is formed by applying a thermal conductive resin onto the bottom part (1110).

2. The battery pack (1000) according to claim 1, wherein:
the elastic member (700) is continuously connected along the front surface, the rear surface and both side surfaces of the battery cell stack (200).

3. The battery pack (1000) according to claim 1, wherein:
the battery cells (110) comprise a protruding electrode lead (111, 112), and
the electrode lead (111, 112) comprises a first electrode lead (111) and a second electrode lead (112) that protrude from the battery cell (110) in directions facing each other.

4. The battery pack (1000) according to claim 3, wherein:
the first electrode lead (111) and the second electrode lead (112) are located on the front surface and the rear surface of the battery cell stack (200).

5. The battery pack (1000) according to claim 1,wherein the battery modules (100) further comprise:
a cooling fin (300) located between the battery cells (110).

6. The battery pack (1000) according to claim 5, wherein:
the cooling fin (300) protrudes from the lower surface of the battery module (100).

7. The battery pack (1000) according to claim 1,wherein the battery modules (100) further comprise:
a first sensing block (410) located between the front surface of the battery cell stack (200) and the elastic member (700), and a second sensing block (420) located between the rear surface of the battery cell stack (200) and the elastic member (700).

8. The battery pack (1000) according to claim 1,wherein the battery modules (100) further comprise:
a side surface pad (600) located between the both side surfaces of the battery cell stack (200) and the elastic member (700).

9. The battery pack (1000) according to claim 1, further comprising:
a cooling fin (300) located between the battery cells (110),
wherein the cooling fin (300) is extended from the lower surface of the battery cell stack (200) to come into contact with the thermal conductive resin layer (1300).

## Patentansprüche

1. Batteriepack (1000) aufweisend:
mehrere Batteriemodule (100),
wobei die Batteriemodule (100) einen Batteriezellenstapel (200) aufweisen, in dem mehrere Batteriezellen (110) gestapelt sind, und
wobei die Batteriemodule (100) ein elastisches Element (700) aufweisen, das die Vorderfläche, die Rückfläche und beide Seitenflächen des Batteriezellenstapels (200) bedeckt,
wobei das elastische Element (700) in seinem unteren Teil geöffnet ist, so dass die untere Fläche des Batteriezellenstapels (200) nach außen freiliegt, und
wobei der Batteriepack (1000) ferner aufweist:
einen Packrahmen (1100), der die mehreren Batteriemodule (100) aufnimmt,
eine wärmeleitfähige Harzschicht (1300), die zwischen den Batteriemodulen (100) und dem unteren Teil (1110) des Packrahmens (1100) angeordnet ist, wobei eine untere Fläche der Batteriezellenstapel (200) in direkten Kontakt mit der wärmeleitfähigen Harzschicht (1300) kommt, und wobei die wärmeleitfähige Harzschicht (1300) durch Aufbringen eines wärmeleitfähigen Harzes auf den unteren Teil (1110) gebildet ist.

2. Batteriepack (1000) nach Anspruch 1, wobei:
das elastische Element (700) kontinuierlich entlang der Vorderfläche, der Rückfläche und beider Seitenflächen des Batteriezellenstapels (200) verbunden ist.

3. Batteriepack (1000) nach Anspruch 1, wobei:
die Batteriezellen (110) eine vorstehende Elektrodenleitung (111, 112) aufweisen, und
die Elektrodenleitung (111, 112) eine erste Elektrodenleitung (111) und eine zweite Elektrodenleitung (112) aufweist, die von der Batteriezelle (110) in einander zugewandten Richtungen vorstehen.

4. Batteriepack (1000) nach Anspruch 3, wobei:
die erste Elektrodenleitung (111) und die zweite Elektrodenleitung (112) auf der Vorderfläche und der Rückfläche des Batteriezellenstapels (200) angeordnet sind.

5. Batteriepack (1000) nach Anspruch 1, wobei die Batteriemodule (100) ferner aufweisen:
eine Kühlrippe (300), die zwischen den Batteriezellen (110) angeordnet ist.

6. Batteriepack (1000) nach Anspruch 5, wobei:
die Kühlrippe (300) von der unteren Fläche des Batteriemoduls (100) vorsteht.

7. Batteriepack (1000) nach Anspruch 1, wobei die Batteriemodule (100) ferner aufweisen:
einen ersten Erfassungsblock (410), der zwischen der Vorderfläche des Batteriezellenstapels (200) und dem elastischen Element (700) angeordnet ist, und einen zweiten Erfassungsblock (420), der zwischen der Rückfläche des Batteriezellenstapels (200) und dem elastischen Element (700) angeordnet ist.

8. Batteriepack (1000) nach Anspruch 1, wobei die Batteriemodule (100) ferner aufweisen:
ein Seitenflächenpad (600), das zwischen den beiden Seitenflächen des Batteriezellenstapels (200) und dem elastischen Element (700) angeordnet ist.

9. Batteriepack (1000) nach Anspruch 1, ferner aufweisend:
eine Kühlrippe (300), die zwischen den Batteriezellen (110) angeordnet ist,
wobei sich die Kühlrippe (300) von der unteren Fläche des Batteriezellenstapels (200) so erstreckt, um in Kontakt mit der wärmeleitfähigen Harzschicht (1300) zu kommen.

## Revendications

1. Bloc-batterie (1000) comprenant :
une pluralité de modules de batterie (100)
les modules de batterie (100) comprenant un empilement de cellules de batterie (200), dans lequel une pluralité de cellules de batterie (110) sont empilées ; et
les modules de batterie (100) comprenant un élément élastique (700) recouvrant la surface antérieure, la surface postérieure, et les deux surfaces latérales de l'empilement de cellules de batterie (200),
l'élément élastique (700) étant ouvert dans sa partie inférieure, de sorte que la surface inférieure de l'empilement de cellules de batterie (200) soit exposée à l'extérieur; et
le bloc-batterie (1000) comprenant en outre,
un cadre de bloc (1100) contenant la pluralité de modules de batterie (100) ;
une couche de résine conductrice thermique (1300) située entre les modules de batterie (100) et la partie inférieure (1110) du cadre de bloc (1100), une surface inférieure des empilements de cellule de batterie (200) entrant en contact direct avec la couche de résine thermo-conductrice (1300), et la couche de résine thermo-conductrice (1300) étant formée par l'application d'une résine thermo-conductrice sur la partie inférieure (1110).

2. Bloc-batterie (1000) selon la revendication 1,
l'élément élastique (700) étant connecté en continu le long de la surface antérieure, de la surface postérieure, et des deux surfaces latérales de l'empilement de cellules de batterie (200).

3. Bloc-batterie (1000) selon la revendication 1,
les cellules de batterie (110) comprenant un conducteur d'électrode saillant (111, 112), et
le conducteur d'électrode (111, 112) comprenant un premier conducteur d'électrode (111) et un deuxième conducteur d'électrode (112) faisant saillie de la cellule de batterie (110) dans des directions qui se font face.

4. Bloc-batterie (1000) selon la revendication 3,
le premier conducteur d'électrode (111) et le deuxième conducteur d'électrode (112) étant situés sur la surface antérieure et la surface postérieure de l'empilement de cellules de batterie (200).

5. Bloc-batterie (1000) selon la revendication 1, les modules de batterie (100) comprenant en outre :
une ailette de refroidissement (300) située entre les cellules de batterie (110).

6. Bloc-batterie (1000) selon la revendication 5,
l'ailette de refroidissement (300) dépassant de la surface inférieure du module de batterie (100).

7. Bloc-batterie (1000) selon la revendication 1, les modules de batterie (100) comprenant en outre :
un premier bloc de détection (410) situé entre la surface antérieure de l'empilement de cellules de batterie (200) et l'élément élastique (700), et un deuxième bloc de détection (420) situé entre la surface postérieure de l'empilement de cellules de batterie (200) et l'élément élastique (700).

8. Bloc-batterie (1000) selon la revendication 1, les modules de batterie (100) comprenant en outre :
un tampon de surface latérale (600) situé entre les deux surfaces latérales de l'empilement de cellules de batterie (200) et l'élément élastique (700).

9. Bloc-batterie (1000) selon la revendication 1, comprenant en outre:
une ailette de refroidissement (300) située entre les cellules de batterie (110),
l'ailette de refroidissement (300) étant déployée de la surface inférieure de l'empilement de cellules de batterie (200) pour se placer au contact de la couche de résine conductrice thermique (1300).
